# EUROPÄISCHE PATENTANMELDUNG

(11) **EP 1 221 526 A1**
(43) Veröffentlichungstag der Anmeldung: **10.07.2002**
(21) Anmeldenummer: 01810021.4
(22) Anmeldetag: 09.01.2001
(51) Int. Cl.: E06B 3/673, E06B 3/677

(54) **Verfahren zur Herstellung von wärmeisolierenden Bau- und/oder Lichtelementen sowie Einrichtung zur Durchführung desselben**

(71) Anmelder: BÄCHLI, Emil, CH-5304 Endingen (CH)
(72) Erfinder: Sager-Hintermann, Kurt, 5724 Dürrenäsch (CH); Bächli, Emil, 5304 Endingen (CH)
(74) Vertreter: Fenner, Werner, Dipl.-Ing.

(57) **Zusammenfassung**

Ein Verfahren und eine Anlage zur Herstellung von wärmeisolierenden Bau- und/ oder Lichtelementen (1), die aus wenigstens zwei, durch Stützelemente (4) voneinander getrennte, an wenigstens einer der einander zugewandten Oberflächen mit einer Wärmestrahlen reflektierenden Schicht versehenen Wandelementen (2, 3) und einer am Rand der Wandelemente (2, 3) befestigten und diese zu einem evakuier- oder begasbaren Hohlraum verbindenden, verformbaren Dichtung bestehen, werden die für ein Bau- und/oder Lichtelement (1) bestimmten, gereinigten und an wenigstens einer Oberfäche beschichteten Wandelemente (2, 3) in einem sich über evakuierbare Fertigungsabschnitte (13) erstreckenden Fertigungsvorgang resp. eine Fertigungsstrecke (14) geführt und dabei wenigstens einseitig an den Rändern jeweils eines Wandelementes (2, 3) verlötbar beschichtet, mit an einem Wandelement (2, 3) in Abständen aufgebrachten Stützelementen (4) versehen, danach unter Einhaltung eines durch die Stützelemente (4) bestimmten Abstandes sich gegenüberliegend positioniert und anschliessend durch eine an den beschichteten Rändern der beiden Wandelemente (4) befestigte, verformbare metallische Dichtung zu einem gasdichten Hohlraum eingefasst werden.

## Beschreibung

Die Erfindung betrifft ein Verfahren zur Herstellung von wärmeisolierenden Bauund/oder Lichtelementen, die aus wenigstens zwei, durch Stützelemente voneinander getrennte, aus Glas, einer Glaslegierung oder Metall gebildeten, an wenigstens einer der einander zugewandten Oberflächen mit einer Wärmestrahlen reflektierenden Schicht versehenen Wandelementen und einer am Rand der Wandelemente befestigten und diese zu einem evakuier- oder begasbaren Hohlraum verbindenden, verformbaren Dichtung bestehen.

Hohe Isolationswerte erlauben eine energie- und umweltschonende Bauweise sowie Nutzung von Bauten und Einrichtungen.
Nicht erst seit den Klimakonferenzen, an denen die Mitgliedstaaten sich verpflichtet haben, ihren Energieverbrauch und den CO₂- Ausstoss zu verringern, kommt der Isolationstechnik eine grosse Bedeutung zu.

Es bedarf daher einer Reduktion der Wärmedurchgangswerte bzw. des K-Wertes bei den in besonderem Masse betroffenen Fenstern, fensterartigen Türen und Dachlukken sowie anderen Bau- und Lichtelementen.
Mit dem bekannten Isolierglas und den zu deren Herstellung benutzten Verfahren sind höhere Isolationsansprüche jedoch nicht erreichbar.

Im Vergleich sind Aussenwände eines Gebäudes mit einem K-Wert von 0,2 W/m² °K herstellbar, wovon die Fenster noch weit entfernt sind und deshalb auch als Kältelöcher bezeichnet werden.

Bei der Herstellung von Fenstern, beispielsweise doppel- resp. mehrfachverglasten Fenstern, werden einzelne Scheiben bekanntlich in einer Edelgasatmosphäre durch Kathoden, die eine Verbrennung erzeugen, an der Oberfläche von Fremdkörpern resp. von Schmutz befreit bzw. gereinigt, um die gereinigte Oberfäche anschliessend, unter ähnlichen Umgebungskonditionen, mit einer Infrarot-Beschichtung einseitig belegen zu können.
Die Infrarot- oder Low-E-Schicht dient der Behinderung des Wärmedurchgangs.

Diese Beschichtung wird durch Magnetronsputtern in einem etwa 50 m langen evakuierten Tunnel durchgeführt, sodass ein sehr hoher energetischer, technischer und finanzieller Aufwand notwendig ist.

Am Ende des Beschichtungsprozesses werden die Glasscheiben aus dem evakuierten Durchlauftunnel ausgeschleust und in atmosphärischer Umgebung zu gasbefüllten Lichtelementen bzw. Fenstern weiterverarbeitet.

Die zu diesen anspruchsvollen Vorbehandlungen benutzten und mit hohem Aufwand betriebenen Mittel werden bisher ausschliesslich für die Reinigung und die Beschichtung der Oberfläche von für Fenster verwendete Glasscheiben verwendet.
Hierzu sei auf einen Aufsatz von Dr.-Ing. H. Christian Schaefer in "Vakuum in Forschung und Praxis (1995) Nr. 3" verwiesen.
Der Autor macht darauf aufmerksam, dass nach einer Wärmeschutzverordnung jedes Isolierglas eine Wärmedämmschicht aufweisen muss, um den neuen Forderungen nach verbesserter Isolierung näher kommen zu können.

Die erwähnten Massnahmen reichen jedoch bei weitem nicht aus, um die Möglichkeit einer spürbaren K-Wert-Minderung auf etwa 0,3 W/m² °K erzielen zu können.
Im Gegenteil, es bedarf in der Praxis weiterer Anstrengungen, um mit einer maschinellen Ausrüstung auf rationelle Weise solche Isolationsschichten verwirklichen zu können.
Der erforderliche hohe Aufwand an Energie und dafür notwendige finanzielle Mittel rechtfertigen aufgrund der neuen Erkenntnisse eine Fabrikation von Bau- und/oder Lichtelementen nach den bekannten Methoden nicht mehr.

Die bislang angewandte Isolationstechnik für Fenster und Fassaden ist seit einigen Jahren überholt und ein Innovationsschub wird dennoch bewusst unterdrückt.

Erst durch ein Bau- und/oder Lichtelement nach der EP-A-0 247 098, das einen K-Wert von weniger als 0, 4 W/m² K ermöglicht, kann eine Weiterentwicklung einer wirtschaftlich interessanten Fertigung von Bau- und/oder Lichtelementen unter vernünftigen und erfolgversprechenden Bedingungen betrieben werden.

Die vorliegende Erfindung macht davon Gebrauch und hat sich die Aufgabe gestellt, Bau- und/oder Lichtelemente der eingangs beschriebenen Art mit unerreicht hohen Isolationswerten rationell zu fertigen und diese an Neubauten wie auch an bestehenden Gebäuden und Einrichtungen zu verwenden.

Erfindungsgemäss wird diese Aufgabe dadurch gelöst, dass die für ein Bau- und/oder Lichtelement vorbehandelten Wandelemente in einem sich über Fertigungsabschnitte erstreckenden Fertigungsvorgang geführt und dabei wenigstens einseitig an den Rändern jeweils eines Wandelementes verlötbar beschichtet, mit an einem Wandelement in Abständen aufgebrachten Stützelementen versehen, danach unter Einhaltung eines durch die Stützelemente bestimmten Abstandes sich gegenüberliegend positioniert und anschliessend durch eine an den beschichteten Rändern der beiden Wandelemente befestigte, verformbare metallische Dichtung zu einem gasdichten Hohlraum eingefasst werden.
Diese Verfahrensweise gestattet eine rationelle Herstellung von als Fenster, Dachoder Fassadenelemente -auch bei Gewächshäusern- ausgebildeten Bau- und/oder Lichtelemente mit einem bisher unerreicht tiefen Kwert.

Alternativ könnte die verlötbare Schicht nach dem Aufbringen der Stützelemente an einem Wandelement befestigt werden.

Es ist vorteilhaft, wenn die für ein mit einem evakuierten Hohlraum auszubildenden Bau- und/oder Lichtelement vorgesehenen Wandelemente einen in wenigstens eine nach einer bestimmten Fertigungsmethode eingerichtete, evakuierbare Fertigungskammer trennbaren Raum durchlaufen, der es erlaubt, optimale Konditionen an die in diesem Raum stattfindende Fertigungsmethode einzustellen.

Es ist im Sinne einer wirtschaftlichen Vorgehensweise ratsam, die für ein Bauund/oder Lichtelement verwendeten Wandelemente hintereinander, nebeneinander, übereinander, versetzt neben- oder übereinander durch die Fertigungsabschnitte zu schicken.

Bei dem durch die erfindungsgemässe Verfahrensweise erforderlichen hohen Automatisierungsgrad zur Fertigung der Bau- und/oder Lichtelemente ist es vorteilhaft, wenn die in einem Fertigungsvorgang angeordneten Fertigungsabschnitte als Fertigungsräume ausgebildet und mit einem an die darin auszuführende Fertigungsmethode angepassten Vakuum ausgestattet sind.

Die bisher bekannte Reinigung der Wandelemente und das anschliessende Auftragen einer die Wärme reflektierenden Schicht unter Vakuum in einer sog. Flachglasbeschichtungsanlage, könnte dem erfindungsgemässen Verfahren vorgeschaltet und mit diesem fertigungsgerecht verbunden werden. Dadurch könnten bestehende Flachglasbeschichtungsanlagen (ca. 40 in Europa) mit dem erfindungsgemässen Verfahren weiterhin betrieben werden. Durch die Verbindung der Flachglasbeschichtungsanlage mit dem erfindungsgemässen Verfahren könnte auf dem Weg zur Realisierung eines Bau- und/oder Lichtelementes auf einfache Art eine erheblich effizientere Reinigungswirkung und höhere Qualität der Infrarotschicht erzielt werden.
Dieser sowohl technische als auch wirtschaftliche Vorteil verhindert die Möglichkeit, vorbehandelte bzw. mit einer Infrarotschicht versehene Wandelemente zwecks Entfernung der sich in einer atmosphärischen Umgebung innert kürzester Zeit bildenden Wasserhäute bei einer Temperatur von etwa 400 °C ausheizen zu müssen. Eine solche Massnahme würde eine Beschichtung nicht unbeschadet überstehen und bei einer Evakuation zu einer unaufhaltsamen, hohen Ausgasungsrate führen.

Bei vorgeschaltetem Vorbehandlungsabschnitt für die Reinigung und Beschichtung der Wandelemente mit einer Wärmestrahlen reflektierenden Schicht ist es zweckmässig, wenn eine förder- und fertigungswirksame Verbindung zwischen Vorbehandlungsabschnitt und dem anschliessenden Fertigungsabschnitt des erfindungsgemässen Fertigungsvorgangs vorgesehen ist.

Der in Form von wenigstens einem evakuierbaren Fertigungsabschnitt ausgebildete Vorbehandlungsabschnitt, auf dem die Wandelemente gereinigt und/oder mit einer Infrarot- resp. Low-E-Schicht ausgestattet werden, kann auch rechtwinklig zu der erfindungsgemässen Anlage angeordnet werden, derart, dass die zur Vorbehandlung der Wandelemente verwendete Förderrichtung rechtwinklig zur Förderrichtung der der erfindungsgemässen Anlage verläuft und am Anfang letzterer endet. Werden die infrarot beschichteten Wandelemente zu Bau- und/oder Lichtelementen weiterverarbeitet, werden sie um etwa 90° in die Förderrichtung der erfindungsgemässen Anlage umgelenkt, ohne dass sie dabei die evakuierte Umgebung verlassen.
Werden die Wandelemente jedoch ausschliesslich mit einer Infrarotschicht versehen, können sie in der eingeschlagenen Förderrichtung aus dem Flachglasbeschichtungsabschnitt resp. Vorbehandlungsabschnitt ausgeschleust werden. D.h. das erfindungsgemässe Verfahren und/oder die Anlage könnte mit einer bestehenden Flachglasbeschichtungsanlage kombiniert und dadurch universell betrieben sowie die Wirtschaftlichkeit und Leistungsfähigkeit markant verbessert werden.

Aufgrund der verschiedenartigen Fertigungsmethoden sind die Fertigungsabschnitte vorteilhaft als Fertigungsräume ausgebildet.

Im Sinne einer Optimierung und Anpassung der Fertigungsräume an die Fertigungsmethoden ist es zur Erzielung einer wirtschaftlichen Herstellung der Bau- und/oder Lichtelemente wichtig, dass die evakuierbaren Fertigungsräume trennbar voneinander ausgebildet sind, um jeweils eine nach der auszuführenden Fertigungsmethode bestimmte Fertigungseinrichtung optimal nutzen zu können.

Als besonders günstige Anordnungsweise der Fertigungsräume erweist es sich, wenn die gereinigten und/oder mit einer Wärmestrahlen reflektierenden Schicht ausgebildeten Wandelemente nach unmittelbar anschliessend durchgeführter Randbeschichtung zur späteren Befestigung der Randdichtung an den einander zugeordneten Wandelementen, wenigstens einem der Wandelemente die zur erforderlichen Beabstandung notwendigen Stützelemente in verteilter Anordnungsweise übertragen, anschliessend die Wandelemente mit dem Abstand der übertragenen Stützelemente zusammengebracht und danach mit der nachgiebigen metallischen Randdichtung einen evakuierten oder evakuierbaren Hohlraum bildend eingefasst werden.
Ein solches Vorgehen gestattet eine kontinuierliche und bezüglich der einzelnen Fertigungsschritte auf einfache Art beherrschbare Durchführbarkeit des erfindungsgemässen Fertigungsvorgangs.

Zur Erzielung einer optimalen Verbindung der Wandelemente an den Rändern mittels Dichtung durch entsprechende Nutzung der evakuierbaren Fertigungsräume ist es zweckmässig, die Beschichtung der Ränder mittels physikalischer (PVD) oder chemischer (CVD) Abscheidung des Werkstoffes aus der Gas- bzw. Dampfphase vorzunehmen, wie beispielsweise in der EP - A - 0 434 802 beschrieben.

Die zum Vakuumaufbau erforderliche hohe Energiemenge macht es empfehlenswert, dass die evakuierten Fertigungsabschnitte bei Fertigungsunterbrüchen voneinander trennbar sind.

Die Fertigungsabschnitte können derart ausgebildet sein, dass sie von den Wandelementen stehend oder liegend durchlaufen werden, sodass sich die Fertigungsräume und die darin vorgesehenen Einrichtungen optimal nutzen lassen.

Zur Durchführung des Verfahrens eignet sich eine Anlage, die zum Transport der Wandelemente auf einer aus mehreren Fertigungsabschnitten gebildeten Fertigungsstrecke eine Fördereinrichtung aufweist und die wenigstens abschnittweise zur Bildung einer Vakuumumgebung mit einer Vakuumquelle verbunden ist, wobei den Fertigungsabschnitten entsprechende Fertigungseinrichtungen zugeordnet sind.

Vorteilhaft sind die Fertigungsabschnitte zur Bildung einer Randbeschichtung an den Wandelementen, zum Auftragen von Stützelementen auf den Wandelementen, zum Aneinanderfügen von wenigstens zwei Wandelementen und zum Anbringen einer verformbaren, metallischen Dichtung am Rand der vereinten Wandelemente ausgebildet und in dieser oder einer anderen Reihenfolge angeordnet, sodass ein störungsfreier Fertigungsvorgang durchgeführt werden kann.

Für eine direkte Verbindung unter den Fertigungsräumen sind die Durchtrittsöffnungen -wie beim Stand der Technik- mit Verschlussklappen oder -schiebern versehen, sodass in einzelnen Fertigungsräumen der drucklose Zustand aufgehoben und der Zugang zu den installierten Fertigungseinrichtungen bewerkstelligt werden kann.

Die besondere Möglichkeit, die erfindungsgemässe Anlage mit einer bestehenden Flachglasbeschichtungsanlage zu kombinieren, ist schon zuvor beschrieben worden, wobei hierbei noch zu beachten wäre, dass die Kombination zwischen den Anlagen eine evakuierbare Verbindung erfordert, wozu ansich keine besonderen Vorkehrungen notwendig sind, da der Beschichtungsabschnitt der Flachglasbeschichtungsanlage evakuierbar ausgebildet ist.

Anschliessend wird die Erfindung unter Bezugnahme auf die Zeichnung, auf die bezüglich aller in der Beschreibung nicht näher erwähnten Einzelheiten verwiesen wird, anhand von Ausführungsbeispielen erläutert. In der Zeichnung zeigen:
- Fig. 1: ein nach dem erfindungsgemässen Verfahren hergestelltes Bau- und/oder Lichtelement,
- Fig. 2: eine Draufsicht auf eine schematisch dargestellte Anlage zur Durchführung des erfindungsgemässen Verfahrens zum Zwecke der Herstellung eines in Fig. 1 gezeigten Bau- und/oder Lichtelementes,
- Fig. 3: eine Draufsicht auf eine schematisch dargestellte, alternative Anlage zur Durchführung des erfindungsgemässen Verfahrens für ein in Fig. 1 dargestelltes Bau- und/oder Lichtelement,
- Fig. 4: eine Draufsicht auf eine schematisch veranschaulichte Anlage zur Durchführung des erfindungsgemässen Verfahrens und
- Fig. 5: eine Draufsicht auf eine schematisch gezeigte Anlage zur Durchführung des erfindungsgemässen Verfahrens.

Das eingangs beschriebene Bau- und/oder Lichtelement eignet sich in besonderem Masse für Fenster, als Fassaden- und Verkleidungselement oder als Isolationselement bzw. Isolationsschicht für Gewächshäuser, Kühlräume oder Kühlgeräte.

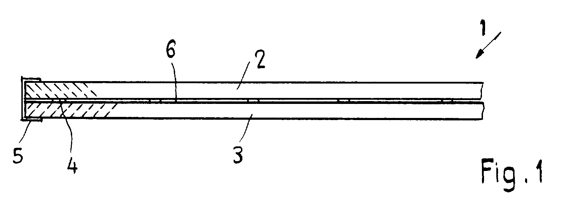

Es lässt sich mit einem K-Wert von weniger als 0,3 W/m² °K auf einfache Art -wie hier vorgeschlagen- industriell fertigen. Danach ist es als Lichtelement von bekannten Fenstern nicht zu unterscheiden.
Bei Anwendung des erfindungsgemässen Verfahrens sind die für ein zwei- oder dreifach verglastes Fenster erforderlichen Wandelemente zuvor von Schmutz und Feuchtigkeit zu reinigen, sodass sie in der evakuierten Umgebung nicht mehr ausgasen können, und ein für ein mehrfach verglastes Fenster bestimmtes Wandelement ist mit einer Wärmestrahlen reflektierenden Schicht zu versehen. Diese vorbereitenden Handlungen -wie in Fig. 1 vermerkt- sind vorteilhaft dem erfindungsgemässen Verfahren unmittelbar vorzuschalten resp. mit letzterem fertigungstechnisch zu verbinden.

Der nach dem Verfahren durchzuführende Fertigungsvorgang findet in evakuierten, als Fertigungsabschnitte einer Fertigungsstrecke bezeichneten Räumen oder Kammern statt, die aneinandergereiht und vorzugsweise voneinander trennbar ausgebildet sind. Der Evakuierungsgrad richtet sich in den Fertigungsabschnitten nach dem der Fertigungsmethode oder dem fertigen Bau- und/oder Lichtelement entsprechenden Unterdruck.

Selbstverständlich können in einem Fertigungsabschnitt mehrere Ver- oder Bearbeitungsschritte durchgeführt werden, ihre Reihenfolge wird jedoch durch das erfindungsgemässe Verfahren bestimmt.

Das erfindungsgemässe Verfahren sieht einen von einer mittels programmiertem Rechner betätigbare Steuerung automatisch durchführbaren Fertigungsvorgang vor, der durch eine Regelung weiter ausgestaltet sein kann.

Das erfindungsgemässe Verfahren kann unmittelbar anschliessend an eine integrierte Vorbehandlung der Wandelemente mit der Beschichtung des Randes zweier Wandelemente beginnen; danach werden vorzugsweise an einer der sich zugewandten Innenseiten der Wandelemente in regelmässigen Abständen Stützelemente haftend aufgesetzt und die Wandelemente hernach sandwichartig aneinandergefügt, um sie abschliessend zur Bildung eines evakuierten bzw. evakuierbaren Zwischenraumes mit einer Dichtung einfassen zu können.

Ein zusätzliches Nachevakuieren des fertigen Bau- und/oder Lichtelementes kann bedarfsfalls im Anschluss an den Fertigungsvorgang, beispielsweise auf oder nach dem letzten Fertigungsabschnitt durchgeführt werden.

Die als Kammern bzw. Räume ausgebildeten Fertigungsabschnitte sind mit Einrichtungen und Geräten für eine bestimmte Fertigungsmethode ausgestattet, die zur Durchführung des erfindungsgemässen Verfahrens vorgesehen sind.

Die Fertigungsabschnitte sind in der Reihenfolge der das Verfahren bestimmenden Fertigungsmethoden wahlweise hintereinander, nebeneinander, übereinander oder versetzt neben- oder übereinander angeordnet, so dass sich ein auf die Anordnung der Maschinen und Einrichtungen günstiger resp. rationeller Fertigungsablauf ergibt.

Die in den Fertigungsabschnitten benötigten Vakua werden bei der Durchführung einer Fertigungsmethode nicht aufgehoben und lassen sich unter den Fertigungsabschnitten austauschen.

Im Sinn einer wirtschaftlich optimierten Vorgehensweise können die Fertigungsabschnitte entsprechend der darin angewendeten Fertigungsethode mit einem unterschiedlichen Evakuierungsgrad ausgestattet.

Die Fertigungsabschnitte können von den Wandelementen liegend und/oder stehend, paarweise oder einzeln durchlaufen werden, so dass eine optimale Anwendung unter den einzelnen Arbeitsmethoden und eine optimale Raumnutzung entstehen kann.

In Fig. 1 ist ein Bau- und/oder Lichtelement 1 als ein Erzeugnis des erfindungsgemässen Verfahrens dargestellt. Es besteht aus zwei aus Glasscheiben gebildeten Wandelementen 2, 3, die durch Stützelemente voneinander getrennt und an den Rändern dicht eingefasst sind. Durch die Einfassung der Wandelemente mittels einer umgelegten, mit der Aussenseite der Wandelemente 2, 3 dicht verbundenen, flexiblen Umreifung, beispielsweise einem metallischen Band 5, entsteht zwischen den Wandelementen 2, 3 ein evakuier- oder begasbarer Zwischenraum 6. Eine derartige Anordnung ist übrigens in der EP - A - 0 434 802 beschrieben und dargestellt.

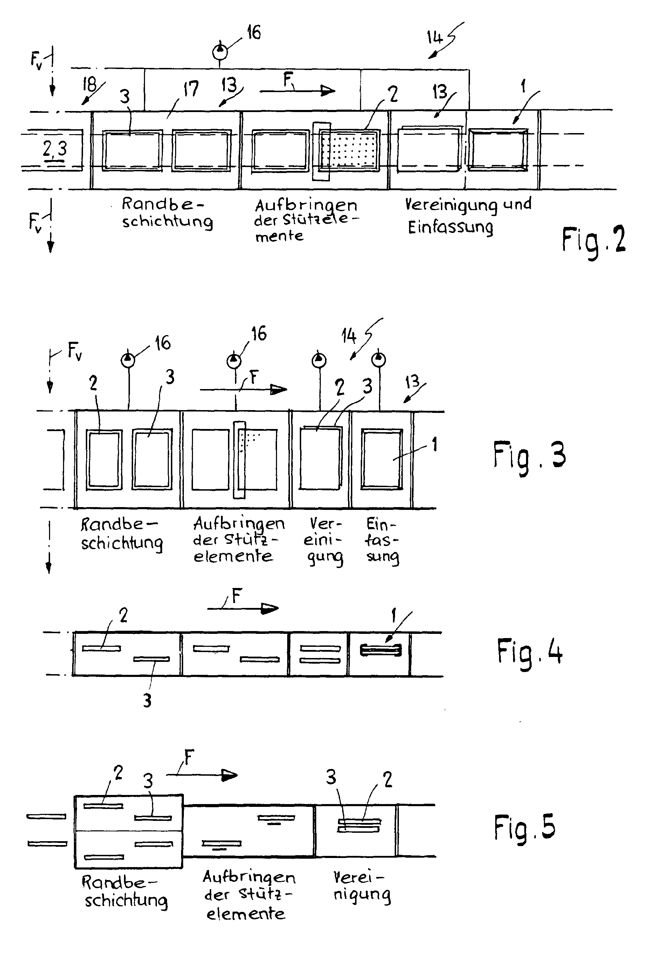

Fig. 2 zeigt beispielhaft eine Anlage 11 zur Durchführung des erfindungsgemäss vorgeschlagenen Verfahrens für die Herstellung des in Fig. 1 dargestellten Bauund/oder Lichtelementes 1. Die Einrichtung 11 zeichnet sich durch eine aus mehreren Fertigungsabschnitten 13 gebildete Fertigungsstrecke 14 aus, über die vorzugsweise jeweils die für ein Bau- und/oder Lichtelement 1 bestimmten Wandelemente 2, 3 durch eine Fördereinrichtung 12 in Förderrichtung F transportiert werden.
Vorstellbar ist auch eine Fertigungsstrecke 14, die aufgrund unterschiedlich lang dauernder Fertigungsmethoden mehrere parallel geschaltete gleiche Fertigungsmethoden mit parallelen Abschnitten aufweist, wie dies beispielsweise in Fig. 5 für die Randbeschichtung gezeigt ist, wobei die parallel geschalteten gleichen Fertigungsmethoden danach oder später wieder zusammenführbar sind oder der Herstellvorgang für die Bau- und/oder Lichtelemente auf diesem Weg zuende geführt werden kann.
Bei einer Eignung können Fertigungsmethoden während dem Transport der Wandelemente 2, 3 durchgeführt und damit die Durchlauf- resp. Taktzeiten verkürzt oder optimal genutzt werden.
Die Fördereinrichtung 12 kann beispielsweise aus einer Mehrzahl an umlaufenden Zugorganen befestigten, fahrbaren oder geführten Gestellen (nicht ersichtlich), an denen die Wandelemente 2, 3 lösbar befestigt sind, bestehen und im Takt der am längsten dauernden Fertigungsmethode angetrieben sein oder wie oben schon erwähnt, können im Sinne eines kontinuierlichen Durchlaufs einzelne Fertigungsabschnitte 13 parallel geschaltete Fertigungseinrichtungen aufweisen, siehe Fig. 5. Die für einen oder mehrere (auch parallele) Fertigungsvorgänge vorgesehenen Fertigungsabschnitte können auch eigene Fördereinrichtungen besitzen, die die Wandelemente 2, 3 von der einen Fördereinrichtung an eine Fördereinrichtung des nachfolgenden Fertigungsabschnittes überführen.
Die verfahrensgemäss sich folgenden Fertigungsabschnitte 13 sind in den Fig. 2 bis 5 linear angeordnet; sie können auch mit Richtungsänderungen einander nachgeschaltet sein.
Die einzelnen Fertigungsabschnitte 13 sind in der Zeichnung durch entsprechende Hinweise mit den stattfindenden Teilvorgängen bezeichnet.
Die Fertigungsabschnitte 13 sind aneinandergereiht und wo nötig, durch schleusenartige Einrichtungen 15 -wie Verschlussklappen oder dgl.- voneinander trennbar. Innerhalb der Fertigungsabschnitte 13 herrscht im Betriebszustand eine zur Behandlung und Bearbeitung der Wandelemente 2, 3 erforderliche evakuierte resp. konditionierte Umgebung, die bei einem besonderen Vorfall in einem Fertigungsabschnitt 13 aufgehoben und anschliessend wieder hergestellt werden kann. Diesbezüglich sind die Fertigungsabschnitte 13 mit ein- und ausschaltbaren Vakuumquellen bzw. -pumpen 16 verbunden.
Die Wandelemente 2, 3 bewegen sich gemäss Darstellung in Fig. 2 einem Bauund/oder Lichtelement 1 zugehörend jeweils paarweise durch einen Fertigungsabschnitt 13, der für wenigstens eine Fertigungsmethode ausgebildet ist. Die zuvor auf einem Vorbehandlungsabschnitt gereinigten und mit einer Wärme reflektierenden Schicht vorbereiteten Wandelemente 2, 3 werden zur Beschichtung der Ränder für das Anbringen einer Dichtung 5 in eine erste, einen Fertigungsabschnitt 13 bildende Kammer 17 eingeschleust.
Die Anordnung der für die Reinigung und die Low-E-Beschichtung vorgesehenen, als Flachglasbeschichtungsanlage bekannte Einrichtung, könnte anstelle von linear -wie in Fig. 1 angedeutet- auch rechtwinklig zur erfindungsgemässen Anlage, an deren vorderem Ende mit letzterer vakuumdicht verbunden sein, sodass rechtwinklig -Förderrichtung Fᵥ- zur (angebauten) Fertigungsstrecke der Bau- und/oder Lichtelemente weiterhin ausschliesslich Wandelemente mit Low-E beschichteter Oberfläche (mit einer bestehenden Flachglasbeschichtungsanlage) produzierbar sind.

Der erste Fertigungsabschnitt der Fertigungsstrecke könnte sodann in zwei Unterabschnitte geteilt werden, wobei der in Förderrichtung F vordere Unterabschnitt zur Reinigung der Ränder, beispielsweise mittels Hochfrequenz, und der anschliessende Unterabschnitt zur Beschichtung der zuvor gereinigten Ränder der Wandelemente 2, 3 mit demselben Vakuum benutzt werden könnte. Die Unterabschnitte können durch Trennelemente, im Interesse einer Reinhaltung des Beschichtungsraumes voneinander getrennt gehalten werden.
Die zwischen jeweils zwei evakuierbaren Fertigungsabschnitten 13 sind -wie beim Stand der Technik- durch schmale, verschliessbare Oeffnungen ausgebildet, durch die die Wandelemente 2, 3 hindurchgeführt werden; eine solche Fertigungsanlage ist beispielsweise in der Europäischen Patentanmeldung Nr.00 810 091 offenbart.
Im Hinblick auf das vorliegende Verfahren ist die Einrichtung 1 in Fertigungsabschnitte 13 getrennt, in denen an den Wandelementen 2, 3 für die Randbeschichtung eine besondere Vorbehandlung und die unmittelbar daran anschliessende Beschichtung der Randbereiche, das Auftragen oder Aufsetzen von Stützelementen resp. von Distanzhaltern auf ein Wandelement, das Aneinanderfügen wenigstens zweier Wandelemente 2, 3 und das Einfassen der Wandelemente 2, 3 in eine den Randbereich der Bau- und/oder Lichtelemente 1 umgebenden Dichtung durchgeführt wird.
In einem frühen Vorgehensschritt des Verfahrens werden an der Oberfläche gereinigte und mit einer Wärme reflektierenden Schicht versehene Wandelemente 2, 3 im Randbereich auf eine zur Anbringung einer metallischen Dichtung durch Verlöten mit dem Glas vorbereitet bzw. behandelt. Zur Erzielung eines hohen Reinheitsgrades ist es notwendig, vorhandenen Schmutz und Wasser sowie eine äussere verunreinigte Schicht des Glases abzutragen. Hierzu lassen sich verschiedene Methoden anwenden, wobei eine evakuierte Umgebung bei der Behandlung und anschliessenden Beschichtung unerlässlich ist. Anwendbare Beschichtungsverfahren sind in der EP - A - 0 434 802 beschrieben.
Hierzu können voneinander getrennte Fertigungsabschnitte benutzt werden, wobei vorausgehend das Reinigungsverfahren und anschliessend im nächsten Fertigungsabschnitt das Beschichten des Randes durchgeführt werden könnte.

Selbstverständlich könnte auch ein einziger Fertigungsabschnitt dazu verwendet werden.
Im übrigen können die Fertigungsabschnitte 13 aufgrund der angewandten Fertigungsmethoden unterschiedlich große Inhalte aufweisen.
Die in evakuierten Räumen benutzten Geräte und Einrichtungen sind mit Materialien ausgestattet, die im Vakuum kaum ausgasen.
Nach der Anbringung der für eine Randdichtung vorgesehenen Schicht an den Wandelementen 2, 3, werden diese in einen nächsten Fertigungsabschnitt überführt, wo auf/an einem Wandelement 2, 3 Stützelemente zur späteren Bildung eines Raumes 6 zwischen den Wandelementen 2, 3 aufgelegt werden. Die Stützelemente 4 werden vorteilhaft in regelmässigen Abständen verteilt an den Wandelementen 2, 3 haftend angebracht.
Danach werden die Wandelemente 2, 3 im Abstand der Höhe der Stützelemente 4 auf einem Fertigungsabschnitt vereinigt, d.h. übereinandergelegt oder seitlich aneinander gestellt.
Dieser Vorgang könnte auch mit dem anschliessenden Fertigungsschritt, bei dem die Wandelemente 2, 3 durch eine Randdichtung 5 eingefasst werden, durchgeführt werden, zumal das Verbinden der Wandelemente 2, 3 mit einem metallischen Band vorteilhaft in einer evakuierten Umgebung erfolgen sollte.

Beim Durchsetzen der Fertigungsabschnitte 13 passieren die Wandelemente 2, 3 den Fertigungsabschnitten 13 zugehörige Fertigungseinrichtungen, die durch Roboter in eine entsprechende Fertigungslage versetzt werden. Fie Fertigungseinrichtungen wie auch die Roboter sind über einen Rechner, der hier nicht gezeigt ist, gesteuert.
Die Ausbildung und Funktionsweise der Fertigungseinrichtungen und der Roboter sind nicht Gegenstand der vorliegenden Erfindung und deshalb weder dargestellt noch beschrieben.
Die Fig. 2 bis 5 vermitteln unterschiedliche Fertigungslagen der Wandelemente 2, 3 in den Fertigungsabschnitten 13, wobei es möglich ist, dass die Wandelemente 2, 3 im Verlauf des Fertigungsvorgangs bis zur Fertigstellung der Bau- und/oder Lichtelemente 1 ihre Lage ein oder mehrmals ändern, d.h. von flachliegend auf stehend und zurück wechseln können.

## Patentansprüche

1. Verfahren zur Herstellung von wärmeisolierenden Bau- und/- oder Lichtelementen, die aus wenigstens zwei, durch Stützelemente voneinander getrennte, aus Glas, einer Glaslegierung oder Metall gebildeten, an wenigstens einer der einander zugewandten Oberflächen mit einer Wärmestrahlen reflektierenden Schicht versehenen Wandelementen und einer am Rand der Wandelemente befestigten und diese zu einem evakuier- oder begasbaren Hohlraum verbindenden, verformbaren Dichtung bestehen, **dadurch gekennzeichnet, dass** die für ein Bau- und/oder Lichtelement bestimmten, gereinigten und an wenigstens einer Oberfäche beschichteten Wandelemente in einem sich über Fertigungsabschnitte erstreckenden Fertigungsvorgang geführt und dabei wenigstens einseitig an den Rändern jeweils eines Wandelementes verlötbar beschichtet, mit an einem Wandelement in Abständen aufgebrachten Stützelementen versehen, danach unter Einhaltung eines durch die Stützelemente bestimmten Abstandes sich gegenüberliegend positioniert und anschliessend durch eine an den beschichteten Rändern der beiden Wandelemente befestigte, verformbare metallische Dichtung zu einem gasdichten Hohlraum eingefasst werden.

2. Verfahren nach Anspruch 1, **dadurch gekennzeichnet, dass** die verlötbare Schicht alternativ nach dem Aufbringen der Stützelemente an einem Wandelement befestigt werden.

3. Verfahren nach Anspruch 1 oder 2, **dadurch gekennzeichnet, dass** die für ein mit einem evakuierten Hohlraum ausgebildeten Bau- und/oder Lichtelement vorgesehenen Wandelemente wenigstens einen nach einer bestimmten Fertigungsmethode eingerichteten, evakuierbaren Fertigungsabschnitt durchlaufen.

4. Verfahren nach einem der Ansprüche 1 bis 3, **dadurch gekennzeichnet, dass** die für ein Bau- und/oder Lichtelement vorgesehenen Wandelemente die Fertigungsabschnitte hintereinander, nebeneinander, übereinander oder versetzt neben- oder übereinander durchlaufen.

5. Verfahren nach einem der Ansprüche 1 bis 4, **dadurch gekennzeichnet, dass** die Fertigungsabschnitte als trennbare Räume ausgebildet und mit einem an die darin auszuführende Fertigungsmethode angepassten Vakuum ausstattbar sind.

6. Verfahren nach einem der Ansprüch 1 bis 5, **dadurch gekennzeichnet, dass** dem Fertigungsvorgang ein als Fertigungsabschnitt des Fertigungsvorgangs ausgebildeter, für die Reinigung und/oder den Auftrag einer Wärmestrahlen reflektierenden Schicht vorgesehener Vorbehandlungsabschnitt vorgeschaltet ist.

7. Verfahren nach einem der Ansprüch 1 bis 6, **dadurch gekennzeichnet, dass** der Vorbehandlungsabschnitt mit den anschliessenden Fertigungsabschnitten des Fertigungsvorgangs fertigungswirksam verbunden ist.

8. Verfahren nach einem der Ansprüche 1 bis 7, **dadurch gekennzeichnet, dass** die Fertigungsabschnitte als voneinander trennbare Fertigungsräume ausgebildet sind.

9. Verfahren nach einem der Ansprüche 1 bis 8, **dadurch gekennzeichnet, dass** nach durchgeführter Randbeschichtung einander zugeordneter Wandelemente, wenigstens an ein Wandelement die Stützelemente übertragen, anschliessend die für ein Bau- und/oder Lichtelement bestimmten Wandelemente im Abstand der Stützelemente zusammengelegt und danach dem Einfassungsvorgang zur Anbringung der Randdichtung zugeführt werden.

10. Verfahren nach einem der Ansprüche 1 bis 9, **dadurch gekennzeichnet, dass** die Wandelemente die Fertigungsabschnitte liegend und/oder stehend durchlaufen.

11. Verfahren nach einem der Ansprüche 1 bis 10, **dadurch gekennzeichnet, dass** der zwischen den Wandelementen bestehende Hohlraum nach Anbringung der Dichtung nachevakuiert wird.

12. Anlage zur Durchführung des Verfahrens nach einem der Ansprüche 1 bis 11, **gekennzeichnet durch** eine Fördereinrichtung (12) zum Transport der Wandelemente (2, 3) auf einer aus mehreren Fertigungsabschnitten (13) gebildeten Fertigungsstrecke (14), die zur Bildung einer Vakuumumgebung wenigstens abschnittsweise mit einer Vakuumquelle (16) verbunden ist.

13. Anlage nach Anspruch 12, **dadurch gekennzeichnet, dass** die Fertigungsabschnitte (13) zur Bildung einer Randbeschichtung, zum Auftragen von Stützelementen (4) auf die Wandelemente (2, 3), zum Aneinanderfügen von wenigstens zwei Wandelementen (2, 3) und zum Anbringen einer verformbaren, metallischen Dichtung am Rand der vereinten Wandelemente (2, 3) ausgebildet und in dieser oder einer anderen Reihenfolge angeordnet sind.

14. Anlage nach einem der Ansprüche 12 oder 13, **dadurch gekennzeichnet, dass** innerhalb der vorgesehenen Reihenfolge die Fertigungsabschnitte (13) zur Bildung einer Randbeschichtung und zum Auftragen von Stützelementen (4) auf ein Wandelement (2, 3) austauschbar sind.

15. Anlage nach einem der Ansprüche 12 bis 14, **dadurch gekennzeichnet, dass** mit der Fertigungsstrecke (14) ein zur Reinigung und Low-E-Beschichtung der Wandelemente (2, 3) ausgebildeter Vorbehandlungsabschnitt (18) förder- und fertigungswirksam vorgeschaltet ist.

16. Anlage nach einem der Ansprüche 12 bis 15, **dadurch gekennzeichnet, dass** die evakuierbaren Fertigungsabschnitte (13) mit einer Vakuumquelle (16) verbunden sind.

17. Anlage nach einem der Ansprüche 12 bis 16, **dadurch gekennzeichnet, dass** die als Fertigungsräume ausgebildeten Fertigungsabschnitte (13) einen Förderpfad der Wandelemente (2, 3) umgebende Durchtrittsöffnungen aufweisen.

18. Anlage nach Anspruch 17, **dadurch gekennzeichnet, dass** der Förderpfad durch eine die Wandelemente (2, 3) transportierende Fördervorrichtung (12) gebildet ist.

19. Anlage nach Anspruch 17 oder 18, **dadurch gekennzeichnet, dass** die die Fertigungsräume verbindenden Durchtrittsöffnungen durch Verschlussklappen oder -schieber ausgebildet sind.

20. Anlage nach einem der Ansprüche 12 bis 19, **dadurch gekennzeichnet, dass** die Fertigungsabschnitte (13) durch automatisch gesteuerte, die durchlaufenden Wandelemente (2, 3) zu Bauund/oder Lichtelementen (1) fertigende Handlings- und Fertigungseinrichtungen ausgestattet sind.

21. Anlage nach einem der Ansprüche 12 bis 20, **dadurch gekennzeichnet, dass** ein Fertigungsabschnitt (13) parallel geschaltete Teilabschnitte aufweist.

22. Anlage nach einem der Ansprüche 12 bis 21, **dadurch gekennzeichnet, dass** die Wandelemente (2, 3) den Fertigungsvorgang taktgesteuert durchlaufen.

23. Anlage nach einem der Ansprüche 12 bis 22, **dadurch gekennzeichnet, dass** der Fertigungsvorgang mit einer von einem programmierten Rechner betätigten Steuerung verbunden, oder geregelt ist.
